(19) **Europäisches Patentamt / European Patent Office / Office européen des brevets**

(11) **EP 2 063 278 B1**

(12) **FASCICULE DE BREVET EUROPEEN**

(45) Date de publication et mention
de la délivrance du brevet:
**28.04.2010 Bulletin 2010/17**

(51) Int Cl.:
***G01R 31/327*** (2006.01)     ***G05B 19/042*** (2006.01)

(21) Numéro de dépôt: **08169754.2**

(22) Date de dépôt: **24.11.2008**

(54) **Procédé de vérification d'un module de sorties numériques d'un automate programmable et module mettant en oeuvre ce procédé**

Verfahren zur Prüfung der digitalen Ausgängein eines PLC-moduls und entsprechendes PLC-modul

Method of verification of the digital outputs of a PLC module and corresponding PLC module

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **26.11.2007 FR 0759317**

(43) Date de publication de la demande:
**27.05.2009 Bulletin 2009/22**

(73) Titulaire: **Schneider Electric Industries SAS 92500 Rueil-Malmaison (FR)**

(72) Inventeur: **Grosjean, Dominique 06650 Le Rouret (FR)**

(74) Mandataire: **Dufresne, Thierry et al Schneider Electric Industries SAS Service Propriété Industrielle 35 rue Joseph Monier - CS 30323 92506 Rueil-Malmaison Cedex (FR)**

(56) Documents cités:
**WO-A-00/31598       US-A- 5 488 323 US-B1- 6 300 764**

**Description**

La présente invention se rapporte à un procédé de vérification d'une voie de sortie d'un module de sorties numériques d'un automate programmable. Elle concerne également un module de sorties numériques d'un automate programmable apte à mettre en oeuvre un tel procédé pour une ou plusieurs de ces voies de sortie. L'invention trouve une application particulièrement avantageuse dans le domaine des automates programmables dits de sécurité.

Un automate programmable ou PLC («Programmable Logical Controller») est un équipement d'automatisme capable de piloter, commander et/ou surveiller un ou plusieurs process à automatiser. De construction généralement modulaire, un automate programmable PLC est composé de différents modules placés dans un ou plusieurs racks et qui communiquent entre eux par un bus de transmission, qui peut être notamment le bus, dit «fond de panier» (ou «backplane»), d'un rack de fixation des modules. Le nombre de modules dépend bien entendu de la taille et du type de process à automatiser. Typiquement, un automate programmable comprend :

- un module d'alimentation fournissant les différentes tensions aux autres modules à travers le bus fond de panier.

- un module unité centrale qui comporte un logiciel embarqué («firmware») intégrant un système d'exploitation (OS) temps réel, et un programme d'application, ou programme utilisateur, contenant les instructions à exécuter par le logiciel embarqué pour effectuer les opérations d'automatisme souhaitées. Le module unité centrale comporte aussi généralement une connexion en face avant vers des outils de programmation de type ordinateur personnel PC.

- un ou plusieurs modules de communication vers des réseaux de communication (Ethernet, ...) ou des interfaces homme-machine (écran, clavier,...).

- des modules d'entrées/sorties E/S de divers types en fonction du ou des process à commander, tels que E/S numériques, analogiques, de comptage, etc. Ces modules E/S comportent généralement plusieurs voies E/S qui sont reliées à des capteurs et à des actionneurs participant à la gestion automatisée du process. A titre d'exemple, un module d'entrées/ sorties numériques peut fréquemment comporter 32 ou 64 voies d'entrées et/ou de sorties distinctes.

L'invention s'adresse plus particulièrement à un module de sorties numériques (appelé aussi sorties digitales ou sorties Tout ou Rien), c'est-à-dire un module qui reçoit du module unité centrale de l'automate des instructions sous la forme de signaux numériques de commande pour chaque voie de sortie, ces signaux de commande étant destinés à commander des charges externes, telles que des actionneurs ou moteurs par exemple, reliées à des bornes du module de sortie.

Dans le contexte d'un automatisme de sécurité où l'automate programmable doit présenter un niveau de sécurité renforcé, le bon fonctionnement de la commande des voies de sortie d'un module de sorties numériques doit être surveillé de manière à s'assurer que le module effectue correctement l'alimentation des charges à commander. En particulier, un signal de commande ordonnant la coupure de l'alimentation d'une charge doit impérativement entraîner une coupure de l'alimentation de la charge concernée.

C'est pourquoi il est habituel d'équiper chaque voie d'un module de sorties numériques d'un dispositif de commande sécurisé comportant deux commutateurs qui sont disposés en série entre une borne d'alimentation et une borne de sortie du module, la charge à commander étant elle-même connectée entre la borne de sortie et une borne de masse du module.

Chacun de ces deux commutateurs redondants reçoit un signal sécurisé de commande d'ouverture ou de fermeture, de sorte que l'alimentation de la charge n'est effective que si les deux commutateurs se ferment simultanément, tandis qu'il suffit qu'un seul des deux commutateurs s'ouvre en réponse à un signal de commande d'ouverture pour que l'alimentation de la charge soit coupée. On comprend qu'une telle disposition permet de se prémunir contre une fermeture intempestive de l'un des commutateurs, en particulier contre une situation où l'un des commutateurs resterait fermé alors qu'un signal de commande d'ouverture lui aura été appliqué. Cette situation peut se produire par exemple lorsqu'un relais électromagnétique reste «collé» en position fermée.

*Le document* WO003159 *décrit un procédé de vérification du fonctionnement d'une voie de sortie numérique d'un automate programmable, cette voie de sortie comportant deux commutateurs reliés en série et commandés par deux signaux numériques de commande, de façon à piloter une charge externe. Cependant, ce document ne permet pas de vérifier par exemple la bonne ouverture des deux commutateurs lorsque les signaux de commande correspondent à des ordres d'ouverture, sans avoir à commander la fermeture d'un des commutateurs.*

Les organismes de contrôle et de certification produits pour la sécurité demandent également qu'un diagnostic sur la capacité d'ouverture soit effectué sur chacun des deux commutateurs de commande pour chaque voie de sortie d'un module de sorties numériques.

C'est pour répondre à ce besoin que l'invention décrit un procédé de vérification du fonctionnement d'une voie d'un module de sorties numériques d'un module de sorties numériques d'un automate programmable, le module comportant deux commutateurs reliés en série entre une borne d'alimentation et une borne de sortie et commandés par deux signaux numériques de commande de façon à piloter une charge externe reliée à la borne de sortie. Le procédé consiste à polariser un point milieu des deux commutateurs à l'aide d'un pont de résistances, et à comparer la tension du point milieu par rapport à deux tensions de référence en fonction de la valeur des signaux de commande.

Selon une caractéristique, le module comporte deux comparateurs dotés chacun d'une entrée négative et d'une entrée positive, une première tension de référence étant appliquée à l'entrée positive du premier comparateur et une deuxième tension de référence, inférieure à la première tension de référence, étant appliquée à l'entrée négative du second comparateur, l'entrée négative du premier comparateur et l'entrée positive du second comparateur étant reliées au point milieu.

L'invention présente notamment l'avantage de pouvoir être mise en oeuvre de manière très simple puisque la polarisation du point milieu des commutateurs peut être facilement réalisée à l'aide de résistances au lieu d'éléments actifs et par l'utilisation de fonctions intrinsèques déjà existantes, comme la tension d'alimentation de la charge externe à commander qui est également utilisée pour polariser le point milieu.

D'autres caractéristiques et avantages vont apparaître dans la description détaillée qui suit en se référant à un mode de réalisation donné à titre d'exemple et représenté par les dessins annexés sur lesquels :

- la figure 1 représente un schéma fonctionnel simplifié d'une voie de sorties d'un module de sorties numériques conforme à l'invention,
- la figure 2 détaille un schéma d'un commutateur en technologie MOSFET utilisé dans l'invention.

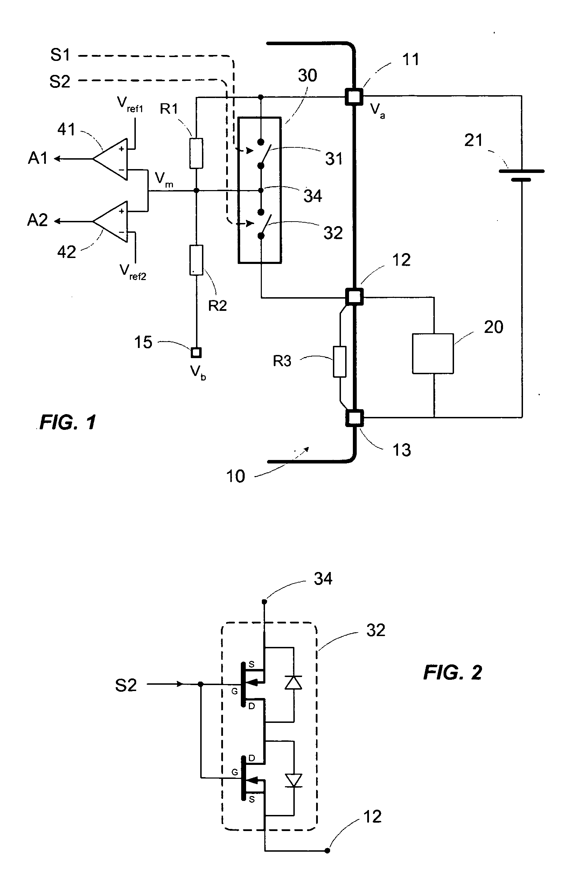

Sur la figure 1 est représenté un module de sécurité 10 de sorties numériques d'un automate programmable dont une des voies de sortie est destinée à commander une charge externe 20 connectée entre une borne de sortie 12 et une borne de masse 13 du module 10, reliée au 0V. Le module 10 comporte une borne d'alimentation 11 qui reçoit une tension d'alimentation nominale $V_a$ à partir par exemple d'une source d'alimentation extérieure 21, la tension nominale $V_a$ étant par exemple égale à 24Vcc. Pour chaque voie de sortie, le module 10 comporte également un dispositif de commande 30 de la charge 20.

Conformément aux exigences de sécurité d'un tel module, ce dispositif de commande 30 est composé de deux commutateurs 31, 32 redondants qui sont reliés en série entre la borne d'alimentation 11 et la borne de sortie 12. La charge 20 ne peut donc être commandée que si les deux commutateurs 31, 32 sont en position fermée. Cela permet ainsi d'éviter qu'une fermeture intempestive d'un des commutateurs 31, 32 n'entraîne la mise en fonctionnement non désirée de la charge 20. Le point milieu entre les deux commutateurs 31, 32 porte la référence 34 sur la figure 1. Le premier commutateur 31 est situé entre la borne 11 d'alimentation et le point milieu 34, tandis que le deuxième commutateur 32 est situé entre le point milieu 34 et la borne 12 de sortie.

Ces commutateurs 31, 32 peuvent être des relais électromécaniques ou de préférence des interrupteurs électroniques réalisés par exemple en technologie MOSFET. Chaque commutateur 31, respectivement 32, reçoit un signal numérique de commande $S_1$, respectivement $S_2$, permettant d'ouvrir ou de fermer le commutateur. Ces signaux de commande $S_1$, $S_2$ proviennent d'une unité de commande, non représentée, du module 10, suite par exemple à des ordres envoyés par le module unité centrale de l'automate programmable via un bus de communication, tel que le bus backplane. En fonctionnement normal, les signaux de commande $S_1$, $S_2$ ont des valeurs identiques mais qui peuvent être calculées par des moyens distincts pour assurer la fonction de sécurité de la commande de la charge 20.

Si un des commutateurs 31, 32 est défectueux, en particulier si le commutateur 31 par exemple reste en permanence fermé, alors la charge 20 est commandée uniquement à partir du signal de commande $S_2$ appliqué au commutateur 32, et il n'y a pas de commande intempestive de la charge 20. On pourrait donc penser que le module 10 fonctionne correctement vis-à-vis du process à automatiser. Néanmoins, dans ce cas, le module 10 ne remplira plus sa fonction de sécurité en cas d'apparition ultérieure d'un deuxième défaut (par exemple collage du commutateur 32). C'est pourquoi, même si le module 10 pilote correctement la charge 20, il est néanmoins nécessaire de tester régulièrement le bon fonctionnement du dispositif de commande 30 composé des deux commutateurs 31, 32, pour détecter un éventuel premier défaut et s'assurer ainsi que le module 10 reste à tout moment capable de remplir sa fonction de sécurité. Ces tests de bon fonctionnement sont de préférence réalisés périodiquement, par exemple toutes les 10 secondes.

A cet effet, l'invention prévoit que le module 10 comporte des moyens de polarisation comprenant, pour chaque voie de sortie à tester, un pont de résistances qui est constitué de deux résistances $R_1$, $R_2$. Une première résistance $R_1$ est raccordée entre la borne d'alimentation 11 et le point milieu 34 des deux commutateurs 31, 32. Une seconde résistance $R_2$ est raccordée entre le point milieu 34 et une borne 15 du module 10, appelée borne négative. Cette borne négative 15 se trouve à une tension déterminée $V_b$ qui est inférieure à la tension $V_a$ de la borne d'alimentation 11. De cette façon, il existe toujours une différence de potentiel positive connue ($V_a$ - $V_b$) entre la borne d'alimentation 11 et la borne négative 15, par exemple ($V_a$ - $V_b$) égale environ à 5V. Alternativement, on pourrait aussi relier directement la borne négative 15 à la borne de masse 13 du module 10. Les valeurs de $R_1$ et $R_2$ sont par exemple de l'ordre d'une centaine de kΩ chacune.

Le procédé de vérification du dispositif de commande 30 consiste à comparer la tension $V_m$ du point

milieu 34 par rapport à deux tensions de référence $V_{ref1}$ et $V_{ref2}$ en fonction de certains tests à effectuer, c'est-à-dire en fonction de la valeur des signaux de commande $S_1$, $S_2$.

Pour cela, le module 10 comporte des moyens de comparaison comprenant, pour chaque voie de sortie à tester, deux comparateurs 41, 42. De façon classique, un comparateur est doté d'une entrée négative et d'une entrée positive et effectue une comparaison entre ces deux entrées pour fournir un résultat sous la forme d'un signal de sortie numérique. Comme indiqué sur la figure 1, l'entrée négative du premier comparateur 41 et l'entrée positive du second comparateur 42 sont connectées ensemble au point milieu 34 et elles reçoivent donc la tension $V_m$ du point milieu 34. Les sorties des deux comparateurs 41, 42, notées $A_1$, $A_2$, sont envoyées à l'unité de commande du module 10.

L'entrée positive du premier comparateur 41 est reliée à une première tension de référence $V_{ref1}$. L'entrée négative du second comparateur 42 est reliée à une deuxième tension de référence $V_{ref2}$, qui est inférieure à la première tension de référence $V_{ref1}$. Les deux tensions de référence $V_{ref1}$, $V_{ref2}$ définissent ainsi une plage de tension et le procédé de vérification consiste à positionner la tension $V_m$ par rapport à cette plage de tension. La largeur ($V_{ref1}$ - $V_{ref2}$) de la plage de tension est choisie pour avoir une marge d'erreur acceptable qui permette de s'affranchir des incertitudes sur les composants et des erreurs sur les mesures.

Par ailleurs, le module comporte une résistance $R_3$ qui est reliée entre la borne de sortie 12 et la borne de masse 13. La valeur de cette résistance $R_3$ (par exemple $R_3$ de l'ordre de 40 k$\Omega$) est choisie pour ne pas perturber le fonctionnement de la charge 20 lorsque celle-ci est commandée. La résistance R3 permet d'effectuer certains tests du dispositif de commande 30 même lorsqu'une charge externe 20 n'est pas raccordée, de façon à ce que la borne de sortie 12 soit néanmoins polarisée.

Un premier test consiste à vérifier la bonne ouverture des deux commutateurs 31, 32, lorsque les signaux de commande $S_1$ et $S_2$ correspondent à des ordres d'ouverture. Si les deux commutateurs 31, 32 sont effectivement bien ouverts (c'est-à-dire à l'état non passant), alors la tension $V_m$ du point milieu 34 est donnée par :

$$V_m - V_b = (V_a - V_b) * (R_2/(R_1+R_2))$$

Les valeurs des tensions de référence $V_{ref1}$ et $V_{ref2}$ ainsi que les valeurs de $R_1$ et $R_2$ sont choisies pour que, lorsque les deux commutateurs 31, 32 sont effectivement bien ouverts, $V_m$ se situe à l'intérieur de la plage de tension de référence $V_{ref1}$, $V_{ref2}$, c'est-à-dire $V_{ref1}$ > $V_m$ > $V_{ref2}$. Dans ce cas, la sortie $A_1$ du comparateur 41 est égale à 1 (car son entrée positive $V_{ref1}$ est supérieure à son entrée négative $V_m$) et la sortie $A_2$ du comparateur 42 est aussi égale à 1 (car son entrée positive $V_m$ est supérieure à son entrée négative $V_{ref2}$).

Si le premier commutateur 31 reste collé malgré des signaux de commande $S_1$, $S_2$ donnant un ordre d'ouverture, alors le point milieu 34 se retrouve directement relié à la borne d'alimentation 11. Dans ce cas, la tension $V_m$ vaut sensiblement $V_a$, soit 24V. Donc la tension $V_m$ est supérieure à $V_{ref1}$, c'est-à-dire à l'extérieur de la plage de tension $V_{ref1}$, $V_{ref2}$. Alors, les sorties des comparateurs 41, 42 sont égales à $A_1$=0 et $A_2$=1. Un tel défaut est donc facilement détectable par l'unité de commande du module 10 en comparant les signaux $S_1$, $S_2$ avec les signaux $A_1$, $A_2$.

Inversement, si le second commutateur 32 reste collé malgré des signaux de commande $S_1$, $S_2$ donnant un ordre d'ouverture, alors le point milieu 34 est reliée à la borne de sortie 12. Dans ce cas, la résistance $R_3$ se retrouve connectée en parallèle de la résistance $R_2$. La valeur de $R_3$ doit être choisie pour que la tension $V_m$ se situe alors à l'extérieur de la plage de tension $V_{ref1}$, $V_{ref2}$, c'est-à-dire $V_m$ < $V_{ref2}$. Les sorties des comparateurs 41, 42 sont égales à $A_1$=1 et $A_2$=0. Ce défaut est donc également détectable par l'unité de commande du module 10 en comparant les signaux $S_1$, $S_2$ avec les signaux $A_1$, $A_2$. Si en plus une charge 20 était également connectée entre la borne de sortie 12 et la borne de masse 13, cela aurait pour conséquence de diminuer encore la valeur de $V_m$ qui resterait donc bien inférieure à $V_{ref2}$.

Ce premier test peut être réalisé à tout moment lorsque la voie de sortie de la charge 20 n'est pas commandée.

Un second test consiste à tester la fermeture correcte du premier commutateur 31 à vide, c'est-à-dire lorsque le second commutateur 32 est ouvert de façon à ne pas provoquer une alimentation non souhaitée de la charge 20. Pour cela, on envoie un signal de commande $S_1$ de fermeture et un signal $S_2$ d'ouverture et on vérifie que le commutateur 31 est bien fermé (c'est-à-dire à l'état passant). Si le commutateur 31 se ferme correctement, la tension $V_m$ vaut sensiblement $V_a$. Donc, dans ce cas, l'unité de commande du module 10 doit vérifier que $A_1$ = 0 et $A_2$ = 1. Sinon, si les deux commutateurs 31, 32 restent ouverts, alors, on constate que $A_1$ = $A_2$ = 1 et le défaut est détecté.

Un troisième test est le test inverse, à savoir la vérification que le second commutateur 32 se ferme correctement en réponse à un signal de commande S2 de fermeture, le premier commutateur 31 restant ouvert. Comme indiqué ci-dessus, si le commutateur 32 se ferme correctement, la tension $V_m$ va devenir inférieure à $V_{ref2}$ à cause de la résistance $R_3$. Donc, dans ce cas, l'unité de commande du module 10 doit vérifier que $A_1$ = 1 et $A_2$ = 0. Sinon, si les deux commutateurs 31, 32 restent ouverts, alors $A_1$ = $A_2$ = 1 et le défaut est détecté.

Durant ce troisième test, il peut cependant se produire une situation de commande redondante, non représentée sur la figure 1, dans laquelle la charge 20 à commander peut également être alimentée en parallèle par une borne de sortie d'un autre module de sorties numériques, ceci pour augmenter non seulement la sécurité mais aussi la disponibilité de l'automatisme. Si la charge 20 est commandée en parallèle par une autre voie de sortie, cela signifie que la borne de sortie 12 se trouve à la tension d'alimentation $V_a$ via cette autre voie de sortie. Dans ce cas, la tension $V_m$ du point milieu 34 prend alors aussi la valeur $V_a$. Les signaux de sortie des comparateurs 41, 42 valent alors respectivement $S_1=0$ et $S_2=1$. Ainsi, malgré cette situation de commande redondante de la charge 20, le troisième test sera OK si $A_1 = 1$ et $A_2 = 0$ ou si $A_1 = 0$ et $A_2 = 1$, et la présence d'un défaut (non fermeture du commutateur 32) sera détectée si $A_1 = A_2 = 1$.

Les deuxième et troisième tests peuvent être réalisés périodiquement lorsque la borne 12 de sortie n'est pas alimentée, car les commutateurs 31, 32 ne sont pas commandés à la fermeture en même temps pendant ces tests.

Ces différents tests peuvent évidemment être réalisés périodiquement et pour une pluralité de voies de sortie, c'est-à-dire pour l'ensemble des voies de sortie du module de sorties numériques que l'on souhaite vérifier. Le module 10 comporte alors les moyens de polarisation et les moyens de comparaison précédemment décrits pour les différentes voies qui comportent deux commutateurs 31, 32 en série.

Si les commutateurs 31, 32 sont des transistors MOSFET, on sait que les composants réalisés avec cette technologie présentent intrinsèquement l'équivalent d'une diode de retour inverse. Cette particularité des transistors MOSFET peut entraîner une difficulté dans la situation de commande redondante décrite précédemment. En effet, on a vu que la borne 12 de sortie peut se trouver éventuellement au potentiel positif $V_a$, ce qui pourrait rendre le deuxième commutateur 32 passant en sens inverse, d'où le risque d'endommager tout le dispositif et de commander intempestivement la borne 12 de sortie.

Pour éviter cet inconvénient, il est proposé le montage de la figure 2 dans lequel le deuxième commutateur 32 est constitué de deux transistors MOSFET reliés tête-bêche et commandés par le même signal de commande $S_2$, les drains des deux transistors étant reliés entre eux. Les deux diodes intrinsèques sont alors montées en opposition, excluant ainsi tout risque intempestif de conduction inverse.

**Revendications**

1. Procédé de vérification du fonctionnement d'une voie d'un module de sorties numériques d'un automate programmable, le module comportant deux commutateurs (31, 32) reliés en série entre une borne d'alimentation (11) et une borne de sortie (12) et commandés par deux signaux numériques de commande ($S_1$,$S_2$) de façon à piloter une charge externe (20) reliée à la borne de sortie (12), **caractérisé en ce que** ledit procédé comprend les étapes consistant à :

   • polariser un point milieu (34) des deux commutateurs (31, 32) à l'aide d'un pont de résistances ($R_1$, $R_2$),
   • comparer la tension ($V_m$) du point milieu (34) par rapport à deux tensions de référence ($V_{ref1}$, $V_{ref2}$) en fonction de la valeur des signaux de commande ($S_1$, $S_2$).

2. Procédé de vérification selon la revendication 1, **caractérisé en ce que** l'étape de comparaison est effectuée à l'aide de deux comparateurs (41, 42) dotés chacun d'une entrée négative et d'une entrée positive, une première tension de référence ($V_{ref1}$) étant appliquée à l'entrée positive du premier comparateur (41) et une deuxième tension de référence ($V_{ref2}$), inférieure à la première tension de référence ($V_{ref1}$), étant appliquée à l'entrée négative du second comparateur (42), l'entrée négative du premier comparateur (41) et l'entrée positive du second comparateur (42) étant reliées au point milieu (34).

3. Procédé de vérification selon la revendication 1, **caractérisé en ce que** l'étape de comparaison est effectuée de façon périodique et pour une pluralité de voies du module de sorties numériques.

4. Module de sorties numériques d'un automate programmable, comportant deux commutateurs de commande (31, 32) reliés en série entre une borne d'alimentation (11) et une borne de sortie (12) et commandés par deux signaux numériques de commande ($S_1$,$S_2$) de façon à piloter une charge (20) reliée à la borne de sortie (12), **caractérisé en ce que** le module comprend en outre :

   • des moyens de polarisation d'un point milieu (34) des deux commutateurs (31, 32), les moyens de polarisation comprenant un pont de résistances ($R_1$, $R_2$),
   • des moyens de comparaison (41, 42) de la tension ($V_m$) du point milieu (34) par rapport à deux tensions de référence ($V_{ref1}$, $V_{ref2}$) en fonction de la valeur des signaux de commande ($S_1$, $S_2$).

5. Module selon la revendication 4, **caractérisé en ce que** les moyens de comparaison comprennent deux comparateurs (41, 42) dotés chacun d'une entrée négative et d'une entrée positive, une première tension de référence ($V_{ref1}$) étant appliquée à l'entrée positive du premier comparateur (41) et une deuxième tension de référence ($V_{ref2}$), inférieure à la première tension de référence ($V_{ref1}$), étant appliquée à l'entrée négative du second comparateur (42), l'entrée négative du premier comparateur (41) et l'entrée positive du second comparateur (42) étant reliées au point milieu (34).

6. Module selon la revendication 4, **caractérisé en ce que** le pont de résistances ($R_1$, $R_2$) comporte une première résistance ($R_1$) raccordée entre la borne d'alimentation (11) et le point milieu (34).

7. Module selon la revendication 6, **caractérisé en ce que** le pont de résistances ($R_1$, $R_2$) comporte également une seconde résistance ($R_2$) raccordée entre le point milieu (34) et une borne négative (15), une différence de potentiel positive déterminée existant entre la borne d'alimentation (11) et la borne négative (15).

8. Module selon la revendication 6, **caractérisé en ce que** le pont de résistances ($R_1$, $R_2$) comporte également une seconde résistance ($R_2$) raccordée entre le point milieu (34) et une borne de masse (13) du module (10).

9. Module selon la revendication 4, **caractérisé en ce que** le module comporte une résistance ($R_3$) disposée entre la borne de sortie (12) et une borne de masse (13) du module (10).

10. Module selon la revendication 4, **caractérisé en ce que** les deux commutateurs (31, 32) sont des commutateurs électroniques réalisés en technologie MOSFET.

11. Module selon la revendication 9, **caractérisé en ce que** le commutateur (32) qui est relié à la borne de sortie (12) est constitué de deux transistors MOSFET montés tête-bêche et commandés par le même signal de commande (S2).

**Claims**

1. Method of verification of the operation of a channel of a digital-outputs module of a programmable logic controller, the module comprising two switches (31, 32) linked in series between a power supply terminal (11) and an output terminal (12) and controlled by two digital control signals ($S_1$, $S_2$) so as to drive an external load (20) linked to the output terminal (12), **characterized in that** the said method comprises the steps consisting in:

> • biasing a midpoint (34) of the two switches (31, 32) with the aid of a resistor bridge ($R_1$, $R_2$),
> • comparing the voltage ($V_m$) of the midpoint (34) with respect to two reference voltages ($V_{ref1}$, $V_{ref2}$) as a function of the value of the control signals ($S_1$, $S_2$).

2. Verification method according to Claim 1, **characterized in that** the comparison step is performed with the aid of two comparators (41, 42) each endowed with a negative input and with a positive input, a first reference voltage ($V_{ref1}$) being applied to the positive input of the first comparator (41) and a second reference voltage ($V_{ref2}$), lower than the first reference voltage ($V_{ref1}$), being applied to the negative input of the second comparator (42), the negative input of the first comparator (41) and the positive input of the second comparator (42) being linked to the midpoint (34).

3. Verification method according to Claim 1, **characterized in that** the comparison step is performed in a periodic manner and for a plurality of channels of the digital-outputs module.

4. Digital-outputs module of a programmable logic controller, comprising two control switches (31, 32) linked in series between a power supply terminal (11) and an output terminal (12) and controlled by two digital control signals ($S_1$, $S_2$) so as to drive a load (20) linked to the output terminal (12), **characterized in that** the module furthermore comprises:

> • means for biasing a midpoint (34) of the two switches (31, 32), the biasing means comprising a resistor bridge ($R_1$, $R_2$),
> • comparison means (41, 42) for comparing the voltage ($V_m$) of the midpoint (34) with respect to two reference voltages ($V_{ref1}$, $V_{ref2}$) as a function of the value of the control signals ($S_1$, $S_2$).

5. Module according to Claim 4, **characterized in that** the comparison means comprise two comparators (41, 42) each endowed with a negative input and with a positive input, a first reference voltage ($V_{ref1}$) being applied to the positive input of the first comparator (41) and a second reference voltage ($V_{ref2}$), lower than the first reference voltage ($V_{ref1}$), being applied to the negative input of the second comparator (42), the negative input of the first comparator (41) and the positive input of the second comparator (42) being linked to the midpoint (34).

6. Module according to Claim 4, **characterized in that** the resistor bridge ($R_1$, $R_2$) comprises a first resistor ($R_1$) wired between the power supply terminal (11) and the midpoint (34).

7. Module according to Claim 6, **characterized in that** the resistor bridge ($R_1$, $R_2$) also comprises a second resistor ($R_2$) wired between the midpoint (34) and a negative terminal (15), a determined positive potential difference existing between the power supply terminal (11) and the negative terminal (15).

8. Module according to Claim 6, **characterized in that** the resistor bridge ($R_1$, $R_2$) also comprises a second resistor ($R_2$) wired between the midpoint (34) and an earth terminal (13) of the module (10).

9. Module according to Claim 4, **characterized in that** the module comprises a resistor ($R_3$) arranged between the output terminal (12) and an earth terminal (13) of the module (10).

10. Module according to Claim 4, **characterized in that** the two switches (31, 32) are electronic switches made by MOSFET technology.

11. Module according to Claim 9, **characterized in that** the switch (32) which is linked to the output terminal (12) consists of two MOSFET transistors mounted head-to-tail and controlled by the same control signal ($S_2$).


**Patentansprüche**

1. Verfahren zur Prüfung des Betriebs eines Kanals eines Moduls von digitalen Ausgängen einer programmierbaren Steuerung, wobei das Modul zwei Wahlschalter (31, 32) aufweist, die in Reihe zwischen einer Versorgungsklemme (11) und einer Ausgangsklemme (12) verbunden sind und von zwei digitalen Steuersignalen ($S_1$, $S_2$) so gesteuert werden, dass sie eine externe Last (20) steuern, die mit der Ausgangsklemme (12) verbunden ist, **dadurch gekennzeichnet, dass** das Verfahren die Schritte aufweist, die darin bestehen:

• einen Mittelpunkt (34) der zwei Wahlschalter (31, 32) mit Hilfe einer Widerstandsbrücke ($R_1$, $R_2$) zu polarisieren,
• die Spannung ($V_m$) des Mittelpunkts (34) bezüglich zwei Bezugsspannungen ($V_{ref1}$, $V_{ref2}$) in Abhängigkeit vom Wert der Steuersignale ($S_1$, $S_2$) zu vergleichen.

2. Prüfverfahren nach Anspruch 1, **dadurch gekennzeichnet, dass** der Vergleichsschritt mit Hilfe von zwei Komparatoren (41, 42) durchgeführt wird, die je mit einem negativen Eingang und mit einem positiven Eingang versehen sind, wobei eine erste Bezugsspannung ($V_{ref1}$) an den positiven Eingang des ersten Komparators (41) und eine zweite Bezugsspannung ($Vr_{ef2)}$, niedriger als die erste Bezugsspannung ($V_{ref1}$), an den negativen Eingang des zweiten Komparators (42) angelegt wird, wobei der negative Eingang des ersten Komparators (41) und der positive Eingang des zweiten Komparators (42) mit dem Mittelpunkt (34) verbunden sind.

3. Prüfverfahren nach Anspruch 1, **dadurch gekenn-**

zeichnet, dass der Vergleichsschritt periodisch und für mehrere Kanäle des Moduls von digitalen Ausgängen durchgeführt wird.

4. Modul von digitalen Ausgängen einer programmierbaren Steuerung, das zwei Steuerschalter (31, 32) aufweist, die in Reihe zwischen einer Versorgungsklemme (11) und einer Ausgangsklemme (12) verbunden sind und von zwei digitalen Steuersignalen ($S_1$, $S_2$) gesteuert werden, um eine Last (20) zu steuern, die mit der Ausgangsklemme (12) verbunden ist, **dadurch gekennzeichnet, dass** das Modul außerdem enthält:

• Einrichtungen zur Polarisierung eines Mittelpunkts (34) der zwei Wahlschalter (31, 32), wobei die Polarisierungseinrichtungen eine Widerstandsbrücke ($R_1$, $R_2$) enthalten,
• Vergleichseinrichtungen (41, 42) der Spannung ($V_m$) des Mittepunkts (34) bezüglich von zwei Bezugsspannungen ($V_{ref1}$, $V_{ref2}$) in Abhängigkeit vom Wert der Steuersignale ($S_1$, $S_2$).

5. Modul nach Anspruch 4, **dadurch gekennzeichnet, dass** die Vergleichseinrichtungen zwei Komparatoren (41, 42) enthalten, die je mit einem negativen Eingang und mit einem positiven Eingang versehen sind, wobei eine erste Bezugsspannung ($V_{ref1}$) an den positiven Eingang des ersten Komparators (41) und eine zweite Bezugsspannung ($V_{ref2}$), niedriger als die erste Bezugsspannung ($V_{ref1}$), an den negativen Eingang des zweiten Komparators (42) angelegt wird, wobei der negative Eingang des ersten Komparators (41) und der positive Eingang des zweiten Komparators (42) mit dem Mittelpunkt (34) verbunden sind.

6. Modul nach Anspruch 4, **dadurch gekennzeichnet, dass** die Widerstandsbrücke ($R_1$, $R_2$) einen ersten Widerstand ($R_1$) aufweist, der zwischen der Versorgungsklemme (11) und dem Mittelpunkt (34) angeschlossen ist.

7. Modul nach Anspruch 6, **dadurch gekennzeichnet, dass** die Widerstandsbrücke ($R_1$, $R_2$) ebenfalls einen zweiten Widerstand ($R_2$) aufweist, der zwischen dem Mittelpunkt (34) und einer negativen Klemme (15) angeschlossen ist, wobei eine bestimmte positive Potentialdifferenz zwischen der Versorgungsklemme (11) und der negativen Klemme (15) existiert.

8. Modul nach Anspruch 6, **dadurch gekennzeichnet, dass** die Widerstandsbrücke ($R_1$, $R_2$) ebenfalls einen zweiten Widerstand ($R_2$) aufweist, der zwischen dem Mittelpunkt (34) und einer Masseklemme (13) des Moduls (10) angeschlossen ist.

9. Modul nach Anspruch 4, **dadurch gekennzeichnet, dass** das Modul einen Widerstand ($R_3$) aufweist, der zwischen der Ausgangsklemme (12) und einer Masseklemme (13) des Moduls (10) angeordnet ist.

10. Modul nach Anspruch 4, **dadurch gekennzeichnet, dass** die zwei Wahlschalter (31, 32) elektronische Wahlschalter sind, die in der MOSFET-Technologie hergestellt sind.

11. Modul nach Anspruch 9, **dadurch gekennzeichnet, dass** der Wahlschalter (32), der mit der Ausgangsklemme (12) verbunden ist, aus zwei MOSFET-Transistoren besteht, die Kopf bei Fuß angeordnet sind und vom gleichen Steuersignal (S2) gesteuert werden.

*FIG. 1*

*FIG. 2*

**EP 2 063 278 B1**

## RÉFÉRENCES CITÉES DANS LA DESCRIPTION

**Documents brevets cités dans la description**

- WO 003159 A